# EUROPÄISCHE PATENTANMELDUNG

(11) **EP 1 790 946 A2**
(43) Veröffentlichungstag der Anmeldung: **30.05.2007**
(21) Anmeldenummer: 06123339.1
(22) Anmeldetag: 02.11.2006
(51) Int. Cl.: G01C 21/26

(54) **Fahrerassistenzsystem für Kraftfahrzeuge**

(30) Priorität: 23.11.2005 DE 102005055744
(71) Anmelder: ROBERT BOSCH GMBH, 70442 Stuttgart (DE)
(72) Erfinder: Lorei, Marcus, 71287, Weissach-Flacht (DE); Niehsen, Wolfgang, 31162, Bad Salzdetfurth (DE); Schick, Jens, 71083, Herrenberg (DE); Wuerz-Wessel, Alexander, 70599, Stuttgart (DE); Simon, Stephan, 31079, Sibbesse (DE)

(57) **Zusammenfassung**

Fahrerassistenzsystem für Kraftfahrzeuge, mit einem Informationssystem (10) zur Erfassung von Daten über die Verkehrsinfrastruktur und den Zustand des Fahrzeugs, und mit einer Ausgabeeinrichtung (14) zur Ausgabe von Informationen an den Fahrer, gekennzeichnet durch ein Dyamikmodul (24), das anhand der vom Informationssystem (10) gelieferten Daten einen Dynamikverlauf für das Fahrzeug berechnet, und eine Empfehlungseinrichtung (26), die anhand des Dynamikverlaufes Hinweise zur Führung des Fahrzeugs erzeugt und über die Ausgabeeinrichtung (14) ausgibt.

## Beschreibung

### Stand der Technik

Die Erfindung betrifft ein Fahrerassistenzsystem für Kraftfahrzeuge, mit einem Informationssystem zur Erfassung von Daten über die Verkehrsinfrastruktur und den Zustand des Fahrzeugs, und mit einer Ausgabeeinrichtung zur Ausgabe von Informationen an den Fahrer.

Aus DE 103 10 501 A1 ist ein Fahrerassistenzsystem dieser Art bekannt, bei dem der Teil des Informationssystems, der Daten über die Verkehrsinfrastruktur bereitstellt, durch eine digitale Straßenkarte eines Navigationssystems gebildet wird. Die Hauptfunktion dieses Fahrerassistenzsystems ist eine adaptive Geschwindigkeitsregelung (ACC; Adaptive Cruise Control) anhand der von einem Radarsensor gelieferten Ortungsdaten über vorausfahrende Fahrzeuge. Das System greift über das Antriebs- und Bremssystem des Fahrzeugs in die Längsführung des Fahrzeugs ein, um den Abstand zu einem vorausfahrenden Fahrzeug automatisch zu regeln. In Situationen, in denen ein Überholwunsch des Fahrers anzunehmen ist, kann, sofern die Verkehrssituation und der anhand der Straßenkarte erkannte Straßenverlauf es erlaubt, über einen Lautsprecher eine Überholempfehlung an den Fahrer ausgegeben werden.

DE 197 49 583 A1 beschreibt ein vergleichbares System, bei dem zur Ortung anderer Fahrzeuge ein Video- und Bildverarbeitungssystem vorgesehen ist. Zur Unterstützung des Fahrers und zur Erhöhung der Sicherheit bei Überholvorgängen wird hier anhand der vom Videosystem erkannten Informationen automatisch über verschiedene Aktoren in die Fahrzeugführung eingegriffen. Auf diese Weise wird eine halbautonome Fahrzeugführung erreicht, wobei der Fahrer die Möglichkeit behält, jederzeit aktiv in das Geschehen einzugreifen.

Die vom Informationssystem bereitgestellten Informationen über die Verkehrsinfrastruktur bieten insbesondere in unübersichtlichen Situationen einen beträchtlichen Sicherheitsgewinn, da sie es z.B. erlauben, bevorstehende enge Kurve vorherzusehen, die der Fahrer noch nicht einsehen kann. Assistenzsysteme, die dem Fahrer einen Teil der Aufgaben bei der Führung des Fahrzeugs abnehmen und somit einen erhöhten Fahrkomfort bieten, werden jedoch nicht von allen Kraftfahrern akzeptiert, insbesondere nicht von solchen, die eine eher sportliche Fahrweise bevorzugen.

Für Fahrzeuge mit Handschaltgetriebe sind auch Einrichtungen bekannt, die dem Fahrer in Abhängigkeit vom Betriebszustand des Motors eine Schaltempfehlung geben, um eine möglichst kraftstoffsparende Fahrweise zu erreichen.

### Vorteile der Erfindung

Die Erfindung mit den in Anspruch 1 angegebenen Merkmalen schafft ein Fahrerassistenzsystem, das die vom Informationssystem bereitgestellten sicherheitsrelevanten Informationen auch für Fahrer nutzbar macht, die selbst die Fahrzeugführung übernehmen.

Zu diesem Zweck wird anhand der vom Informationssystem gelieferten Daten ein Dynamikverlauf für das Fahrzeug berechnet, insbesondere auch unter Berücksichtigung von bevorstehenden Kurven, die der Fahrer möglicherweise noch nicht voll einsehen kann, und dieser Dynamikverlauf bildet dann die Grundlage für die Ausgabe von Hinweisen, die es dem Fahrer erlauben, die Fahrdynamik besser an die Verkehrssituation und den Straßenverlauf anzupassen. Auf diese Weise kann insbesondere die Gefahr verringert werden, daß es durch überhöhte Geschwindigkeit vor oder in Kurven zu Unfällen kommt.

Vorteilhafte Ausgestaltungen der Erfindung ergeben sich aus den Unteransprüchen.

Informationen über die Verkehrsinfrastruktur, insbesondere bevorstehende Kreuzungen oder Einmündungen, die Fahrbahnkrümmung und dergleichen werden bevorzugt aus den Daten einer digitalen Karte abgeleitet. Diese Daten sind bei Fahrzeugen mit Navigationssystem ohnehin verfügbar. Im Fall fortgeschrittener Navigationssysteme können diese Informationen auch Fahrbahnattribute wie z.B. die Anzahl der Fahrspuren, bestehende Geschwindigkeitsbeschränkungen und dergleichen einschließen.

Bevorzugt umfaßt das Informationssystem auch eine oder mehrere Videokameras, z.B. zur Objektdetektion, zur Spurerkennung, zur Bestimmung der Positionierung des Fahrzeugs in der eigenen Spur, zur Zuordnung von Objekten zur eigenen Spur und dergleichen.

Zur Objektdetektion, insbesondere zur Detektion vorausfahrender Fahrzeuge, ist bevorzugt ein Radar- und/oder Lidarsystem vorgesehen. Gegebenenfalls kann für die oben genannten Zwecke auch ein bildgebendes Radarsystem vorgesehen sein, das neben der Objektdetektion auch eine Spurerkennung und dergleichen erlaubt.

Ein Regensensor ermöglicht darüber hinaus eine Berücksichtigung des aktuellen Straßenzustands.

Weiterhin umfaßt das Informationssystem bevorzugt einen oder mehrere Fahrzeugsensoren oder vergleichbare Quellen für fahrzeugbezogene Daten, wie z.B. die Motordrehzahl, die gewählte Getriebestufe, die Geschwindigkeit, Raddrehzahlen, Lenkwinkel, Gierraten, Längs- und Quer- oder Winkelbeschleunigungen und den Zustand eines elektronischen Stabilitätssystems (ESP).

Vorzugsweise werden die Daten mehrerer Sensorsysteme miteinander fusioniert, so daß z.B. fehlende oder unvollständige Informationen aus der digitalen Karte durch entsprechende Informationen des Video- oder Radarsystems ersetzt oder ergänzt werden können.

Anhand der vom Informationssystem bereitgestellten Daten über den Fahrzeugzustand und die Fahrzeugumgebung berechnet das Dynamikmodul vorzugsweise einen optimale Fahrkurs (Ideallinie) sowie einen optimalen Dynamikverlauf und ggf. auch eine optimale Fahrzeugkonditionierung (z.B. Getriebestufe).

Je nach Ausführungsform kann die Berechnung des Dynamikverlaufes fortwährend oder punktuell, insbesondere kurz vor der Einfahrt in eine Kurve, geschehen.

Über eine Ausgabeeinrichtung erhält der Fahrer dann Hinweise, die ihn dazu veranlassen, die aktuelle Fahrdynamik an den berechneten optimalen Dynamikverlauf anzupassen. Die Ausgabe dieser Hinweise kann über verschiedene Kanäle erfolgen, z.B. optisch über eine Anzeige in einem Kombiinstrument, einem Head-Up-Display und dergleichen, akustisch, beispielsweise durch Ausgabe von gesprochener Sprache, vergleichbar den Streckenansagen eines Rallye-Copiloten, oder auch haptisch, z.B. durch Vibration des Sitzes, des Lenkrads und dergleichen.

Sofern die Berechnung des Dynamikverlaufes nur punktuell erfolgt, können an den Fahrer bei der Einfahrt in eine Kurve z.B. die folgenden Informationen übermittelt werden: Wahl der optimalen Getriebestufe für die Kurvendurchfahrt, optimale Geschwindigkeit, Richtung der Kurve, Kurvencharakter (z.B. "eng" oder "weit" oder Angabe des Kurvenradius oder der maximalen Geschwindigkeit), Bremspunkt (ggf. unter Berücksichtigung des Fahrzeugtyps: Hinterradantrieb, Vorderradantrieb).

Wenn die Berechnung des Dynamikverlaufes fortwährend erfolgt, kann der Fahrer z.B. kontinuierlich die folgenden Informationen erhalten: optimaler Lenkeinschlag, z.B. durch Farbcodierung (grün für optimal, rot für nicht optimal) und/oder durch Anzeige einer relativen Lenkrichtungskorrektur (Pfeile nach links oder rechts für die Lenkkorrektur oder Pfeil nach oben für geradeaus), Angabe der aktuellen optimalen Geschwindigkeit (damit implizite Angabe des Bremspunktes) oder alternativ explizite Angabe des Bremspunktes, Angabe der optimalen Getriebestufe, Kurvenrichtung und Kurvencharakter.

### Zeichnung

Ein Ausführungsbeispiel der Erfindung ist in den Zeichnungen dargestellt und in der nachfolgenden Beschreibung näher erläutert.

Es zeigen:
Figur lein Blockdiagramm des Fahrerassistenzsystems; und

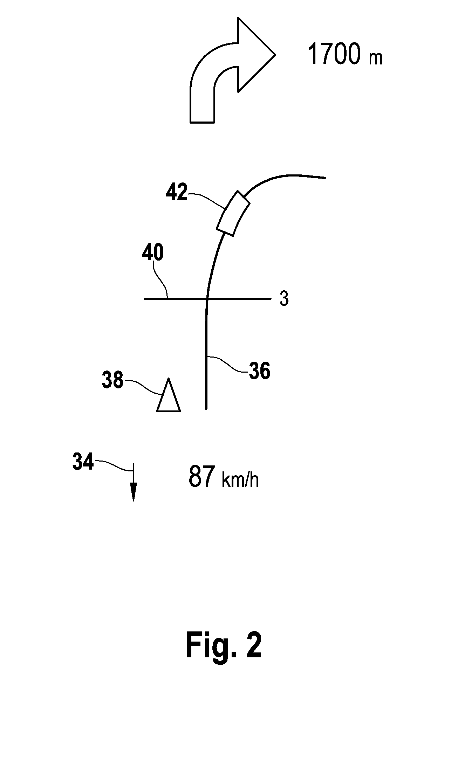

Figur 2ein Beispiel für eine Anzeige von Hinweisen auf einem Head-Up-Display.

### Beschreibung des Ausführungsbeispiels

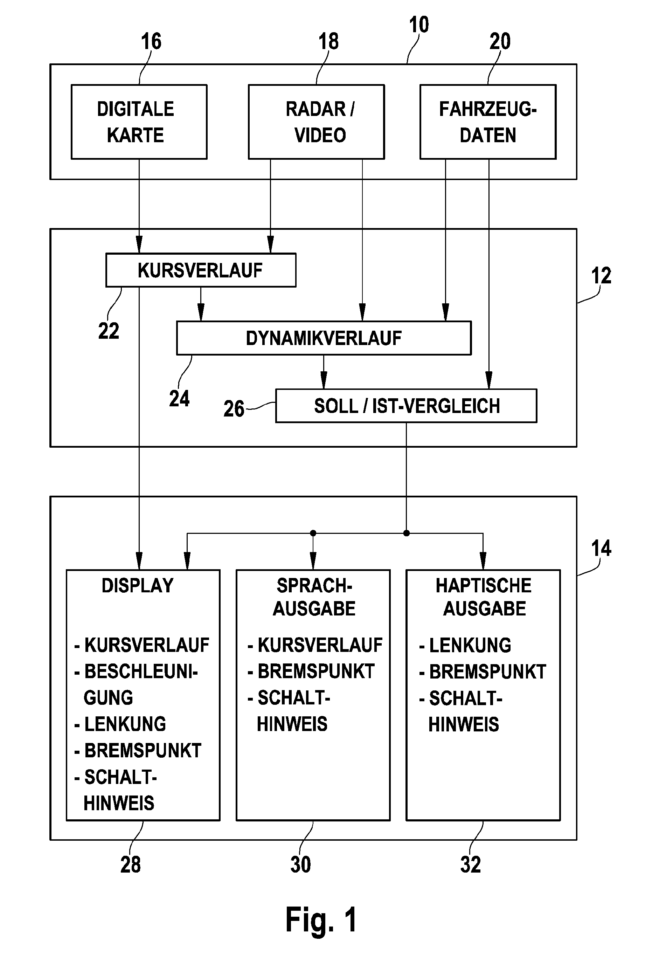

Die wesentlichen Komponenten des in Figur 1 gezeigten Fahrerassistenzsystems sind ein Informationssystem 10, ein Datenverarbeitungssystem 12 und eine Ausgabeeinrichtung 14 mit mehreren Ausgabekanälen.

Das Informationssystem 10 stellt Informationen aus verschiedenen Quellen bereit, insbesondere Straßeninformation aus einer digitalen Karte 16, die Teil eines fahrzeugeigenen Navigationssystems sein kann, Informationen eines Radar- und/oder Videosystems 18 sowie verschiedene Fahrzeugdaten 20, die über den Zustand des Fahrzeugs selbst Auskunft geben und mit Hilfe von fahrzeugeigenen Sensoren oder anderen Fahrzeugkomponenten erfaßt werden, einschließlich Daten, die vom Motor- und Getriebemanagementsystem, von einem ESP-System und dergleichen geliefert werden.

Die Daten der digitalen Karte 16 und des Radar- und/oder Videosystems 18 werden im Datenverarbeitungssystem 12 miteinander fusioniert, um in einem Kursmodul 22 den Verlauf der Fahrbahn bzw. des vom Fahrzeug zu durchfahrenden Kurses im näheren und weiteren Vorfeld des Fahrzeugs zu bestimmen. Anhand des Kursverlaufes wird dann in einem Dynamikmodul 24 ein optimaler Dynamikverlauf für das Fahrzeug berechnet. Dieser Dynamikverlauf gibt insbesondere den zeitlichen Verlauf der Geschwindigkeit oder Beschleunigung des Fahrzeugs an und ist so gewählt, daß die Querbeschleunigung, die sich aus der Krümmung des Kursverlaufes und der Fahrgeschwindigkeit ergibt, innerhalb zulässiger Grenzen bleibt. Die Grenzen können dabei situationsabhängig variieren, beispielsweise in Abhängigkeit vom Signal eines Regensensors oder vom Fahrbahnreibungskoeffizienten, der aus den vom ESP-System gelieferten Fahrzeugdaten abgeleitet werden kann. Innerhalb der vom Radar- und/oder Videosystems 18 erkannten Grenzen der derzeit befahrenen Fahrspur kann das Dynamikmodul 24 darüber hinaus auch den gefahrenen Kurs so modifizieren, daß das Fahrzeug der "Ideallinie" folgt. Der Dynamikverlauf schließt dann auch die zeitliche Entwicklung des Lenkeinschlags ein.

Sofern vom Radar- und/oder Videosystem 18 Hindernisse, insbesondere vorausfahrende Fahrzeuge geortet werden, so werden deren Orts- und Bewegungskoordinaten ebenfalls bei der Berechnung des Dynamikverlaufes berücksichtigt.

Ein Vergleichsmodul 26 vergleicht dann fortlaufend den berechneten Dynamikverlauf mit dem durch die Fahrzeugdaten 20 repräsentierten Istzustand, und im Fall von signifikanten Abweichungen werden entsprechende Hinweise über die Ausgabeeinrichtung 14 an den Fahrer ausgegeben.

Die Ausgabeeinrichtung 14 umfaßt im gezeigten Beispiel ein Display, das sich beispielsweise auf der Instrumententafel des Fahrzeugs befinden kann oder vorzugsweise in die Windschutzscheibe projiziert wird (Head-Up-Display), ein Sprachausgabesystem 30 zur Ausgabe von synthetischer oder vorab aufgenommener Sprache, und schließlich ein haptisches Ausgabesystem 32 zur Ausgabe von haptischer Information.

Der vom Kursmodul 22 berechnete Kursverlauf wird symbolisch oder bildlich auf dem Display dargestellt, so daß der Fahrer auf unübersichtlichen Strecken auch den Verlauf des für ihn nicht einsehbaren Streckenabschnitts erkennen kann. Weiterhin kann das Display 28 auch zur Ausgabe von symbolischen Hinweisen genutzt werden, die den Fahrer veranlassen, das Fahrzeug zu beschleunigen oder zu verzögern, den Lenkeinschlag zu korrigieren, die Fahrzeugbremse zu betätigen oder - bei Fahrzeugen mit Handschaltgetriebe - die Getriebestufe zu wechseln. Alternativ oder zusätzlich können einige oder mehrere dieser Hinweise auch über das Sprachausgabemodul 30 gegeben werden, beispielsweise in der Form kurzer vorprogrammierter Texte wie etwa: "enge Linkskurve nach 200 Metern, 60 km/h", "jetzt bremsen", "dritter Gang" und dergleichen. Die haptische Ausgabeeinrichtung 32 ermöglicht es, beispielsweise den Fahrersitz, das Lenkrad oder das Gaspedal in leichte Vibrationen zu versetzen, um den Fahrer zu Korrekturen des Lenkeinschlags oder zum Bremsen oder Schalten zu veranlassen.

Vorzugsweise läßt sich die Ausgabeeinrichtung 14 durch den Fahrer so konfigurieren, daß er für jede Informationsart festlegen kann, auf welchem Kanal oder welchen Kanälen er diese Information erhalten möchte.

Die haptische Ausgabe von Lenkhinweisen kann beispielsweise auch in der Form erfolgen, daß das Lenkrad durch einen geeigneten Antrieb aktiv ein wenig in die Richtung gedreht oder vorgespannt wird, in die der Fahrer lenken soll, wobei der Fahrer natürlich die Möglichkeit behält, diese Eingriffe von Hand zu übersteuern.

Figur 2 zeigt ein Beispiel für das auf dem Display 28 ausgegebene Bild. Es wird hier angenommen, daß die Berechnung des Dynamikverlaufes fortlaufend während der gesamten Fahrt erfolgt.

Eine Geschwindigkeitsanzeige "87 km/h" am unteren Bildrand gibt, wie bei Head-Up-Displays üblich, die aktuell gefahrene Geschwindigkeit an. Links daneben ist im gezeigten Beispiel ein nach unten gerichteter Pfeil 34 dargestellt, der symbolisiert, daß die aktuelle Geschwindigkeit zu hoch ist, daß also der Fahrer die Geschwindigkeit senken sollte, etwa durch Zurücknehmen des Gaspedals.

Die Elemente am oberen Bildrand in Figur 2 sind die üblichen Abbiegehinweise des Navigationssystems, im gezeigten Beispiel: "nach 1700m rechts abbiegen".

Der mittlere Teil des Displays in Figur 2 illustriert eine von zahlreichen verschiedenen Möglichkeiten, den Fahrer über den Kursverlauf zu informieren sowie Lenkhinweise, Schalthinweise und Bremsempfehlungen (Bremspunkt) zu geben. Die gekrümmte Linie 36 gibt den Verlauf der Fahrbahn oder, genauer, den Verlauf der vom Dynamikmodul berechneten Ideallinie an, beispielsweise für die nächsten 200m. Dieser Entfernungsbereich kann ggf. vom Fahrer nach Wunsch gewählt werden. Im gezeigten Beispiel knickt die Fahrbahn zunächst leicht und dann relativ scharf nach rechts ab.

Ein kleines Dreieck 38 neben dem unteren Ende der Linie 36 symbolisiert die aktuelle Querposition des eigenen Fahrzeugs in Bezug auf die Ideallinie (maßstäblich übertrieben). Wenn der Fahrer auf der Ideallinie fährt, liegt die Spitze des Dreiecks 38 auf der Linie 36. Im gezeigten Bild erhält der Fahrer somit implizit die Empfehlung, eine Lenkkorrektur nach rechts vorzunehmen.

Eine Markierung 40 in der Form eines waagerechten Striches mit der danebenstehenden Ziffer "3" repräsentiert die Empfehlung, in den dritten Gang herunterzuschalten. Die Linie 36 wie auch die Lage der Markierung 40 werden fortlaufend aktualisiert, so daß sich die Markierung 40 auf das Dreieck 38 zu bewegt. Wenn die Markierung 40 die Spitze des Dreiecks 38 erreicht, so bedeutet dies, daß der optimale Zeitpunkt für das Herunterschalten gekommen ist.

Auf analoge Weise markiert ein verdickter Abschnitt 42 der Linie 36 den optimalen Bremspunkt vor der Einfahrt in die enge Kurve. Die Länge dieses Abschnitts gibt die Dauer bzw. Stärke dieses Bremseingriffs an. Wenn der Abschnitt 42 die Höhe des Dreiecks 38 erreicht hat, so ist der geeignete Bremspunkt gekommen, und der Abschnitt 42 verkürzt sich dann allmählich auf 0 und nimmt dabei in dem Maße ab, wie sich die Istgeschwindigkeit der Sollgeschwindigkeit nähert.

An Kreuzungen oder sonstigen Abbiegemöglichkeiten können die Linie 36 und das Dreieck 38 zugleich dazu benutzt werden, die Abbiegeempfehlung des Navigationssystems zu verdeutlichen. Dabei kann ggf. die aus dem Videobild extrahierte Information über die genaue Lage der Kreuzung dazu benutzt werden, die vom Navigationssystem vorgenommene GPS-Bestimmung der Position des eigenen Fahrzeugs zu präzisieren und ggf. zu korrigieren.

## Patentansprüche

1. Fahrerassistenzsystem für Kraftfahrzeuge, mit einem Informationssystem (10) zur Erfassung von Daten über die Verkehrsinfrastruktur und den Zustand des Fahrzeugs, und mit einer Ausgabeeinrichtung (14) zur Ausgabe von Informationen an den Fahrer, **gekennzeichnet durch** ein Dynamikmodul (24), das anhand der vom Informationssystem (10) gelieferten Daten einen Dynamikverlauf für das Fahrzeug berechnet, und eine Empfehlungseinrichtung (26), die anhand des Dynamikverlaufes Hinweise zur Führung des Fahrzeugs erzeugt und über die Ausgabeeinrichtung (14) ausgibt.

2. Fahrerassistenzsystem nach Anspruch 1, **dadurch gekennzeichnet, daß** das Informationssystem (10) Daten einer digitalen Karte (16) für den Straßenverlauf bereitstellt.

3. Fahrerassistenzsystem nach Anspruch 1 oder 2, **dadurch gekennzeichnet, daß** das Informationssystem (10) ein Radar- und/oder Videosystem (18) zur Erfassung des Verkehrsumfelds einschließt.

4. Fahrerassistenzsystem nach einem der vorstehenden Ansprüche, **dadurch gekennzeichnet, daß** das Dynamikmodul (24) dazu ausgebildet ist, anhand der Daten über die Verkehrsinfrastruktur bevorstehende Kurven zu erkennen und eine angemessene Geschwindigkeit zum Durchfahren der Kurve zu berechnen.

5. Fahrerassistenzsystem nach Anspruch 4, **dadurch gekennzeichnet, daß** die Empfehlungseinrichtung (26) dazu ausgebildet ist, einen Hinweis (34) zur Korrektur der Geschwindigkeit auszugeben.

6. Fahrerassistenzsystem nach Anspruch 4 oder 5, für Fahrzeuge mit Handschaltgetriebe, **dadurch gekennzeichnet, daß** die Empfehlungseinrichtung (26) dazu ausgebildet ist, eine Schaltempfehlung (40) auszugeben.

7. Fahrerassistenzsystem nach einem der Ansprüche 4 bis 6, **dadurch gekennzeichnet, daß** die Empfehlungseinrichtung (26) dazu ausgebildet ist, eine Empfehlung (42) für einen optimalen Bremspunkt bei Einfahrt in die Kurve auszugeben.

8. Fahrerassistenzsystem nach einem der Ansprüche 4 bis 7, **dadurch gekennzeichnet, daß** die Empfehlungseinrichtung (26) dazu ausgebildet ist, eine Lenkempfehlung (38) auszugeben.

9. Fahrerassistenzsystem nach einem der vorstehenden Ansprüche, **dadurch gekennzeichnet, daß** die Ausgabeeinrichtung (14) dazu ausgebildet ist, anhand der Daten des Informationssystems (10) einen Hinweis (36) auszugeben, der eine bevorstehende Kurve charakterisiert.

10. Fahrerassistenzsystem nach einem der vorstehenden Ansprüche, **dadurch gekennzeichnet, daß** ein Kursmodul (22) dazu vorgesehen ist, den Straßenverlauf anhand der Informationen des Informationssystems (10) fortlaufend zu verfolgen und bevorstehende Kurven zu erkennen und das Dynamikmodul (24) jeweils vor oder bei Einfahrt in eine Kurve zu aktivieren.
